(19) **Europäisches Patentamt**

**European Patent Office**

**Office européen des brevets**

(11) Veröffentlichungsnummer: **0 608 840 A1**

## (12) EUROPÄISCHE PATENTANMELDUNG

(21) Anmeldenummer: **94101069.6**

(22) Anmeldetag: **25.01.94**

(51) Int. Cl.5: **G01N 27/12**, G08B 17/117

(30) Priorität: **28.01.93 DE 4302367**

(43) Veröffentlichungstag der Anmeldung: **03.08.94 Patentblatt 94/31**

(84) Benannte Vertragsstaaten: **AT BE CH DE DK ES FR GB GR IT LI LU NL**

(71) Anmelder: **SIEMENS AKTIENGESELLSCHAFT Wittelsbacherplatz 2 D-80333 München(DE)** Anmelder: **RWE Energie Aktiengesellschaft Kruppstrasse 5 D-45128 Essen(DE)**

(72) Erfinder: **Hellman,Josef,Dipl.-Ing. Geranienweg 4 D-45739 Oer-Erkenschwick(DE)** Erfinder: **Petig,Heinz,Dipl.-Ing. Jupiterstrasse 26b D-45277 Essen(DE)** Erfinder: **Kelleter,Jörg,Dipl.-Phys. Klosterweg 1 D-35394 Giessen(DE)** Erfinder: **Kiesewetter,Olaf,Dr.Ing. Neue Sorge 32a D-98716 Geschwenda(DE)** Erfinder: **Die anderen Erfinder haben auf ihre Nennung verzichtet**

(74) Vertreter: **Fuchs, Franz-Josef, Dr.-Ing. et al Postfach 22 13 17 D-80503 München (DE)**

(54) **System zur indirekten Ermittlung kritischer Zustände von zustandsabhängig Gase entwickelnden Stoffen, Anlagenteilen etc.**

(57) Verfahren und Einrichtung zur indirekten Ermittlung der Temperatur oder anderer, insbesondere kritischer, Zustände von zustandsabhängig Gase entwickelnden Stoffen oder Stoffgemischen durch gassensitive Sensoren, z.B. zur Verhinderung oder zur Detektion von Schwelbränden in Bekohlungsanlagen, wobei die Temperatur oder die anderen Zustände der Stoffe oder Stoffgemische durch einen Vergleich von bei mindestens zwei unterschiedlichen Sensorzuständen gemessenen und aus den Messungen errechneten Gaszustands- und Entwicklungsmustern mit gespeicherten Mustern ermittelt werden und wobei der Vergleich anhand von Zeitverlaufsähnlichkeiten, insbesondere nach Filterung der Ausgangssignale der Sensoren, vorzugsweise einer Tiefpaßfilterung, erfolgt.

FIG 2

Die Erfindung betrifft ein System zur indirekten Ermittlung der Temperatur oder anderer, insbesondere kritischer, Zustände von zustandsabhängig Gase entwickelnden Stoffen oder Anlagenteilen durch gassensitive Sensoren, z.B. zur Verhinderung oder zur Detektion von Schwelbränden in Bekohlungsanlagen.

Die Ermittlung der Temperatur oder anderer mit Gasentwicklung verbundener, insbesondere kritischer, Zustände in Industrieanlagen aller Art, aber auch von Halden oder Deponien, etc. ist von erheblicher wirtschaftlicher Bedeutung. Besonders wichtig ist dabei sowohl die Verhinderung von Schwelbränden als auch die Erkennung von Schwelbränden im Frühstadium. In brandgefährdeten Anlagen kann durch eine Temperaturüberwachung von in der Anlage verarbeiteten und hergestellten Stoffen und zusätzlich von einzelnen Anlagenteilen die Entstehung von Schwelbränden in vielen Fällen verhindert werden. So kann man z.B. die Temperaturen von Lagerrollen bei Förderbändern überwachen, um unzulässige Überhitzungen aufgrund eines Mangels an Schmiermittel zu erkennen. Bisher wurde dies z.B. durch direkte oder indirekte Temperaturmessung, etwa mit Farbumschlagslacken oder Infrarotsstrahlungsempfängern erreicht. Derartige Überwachungen sind jedoch nur punktuell möglich oder beschränken sich auf die Oberflächen des transportierten oder behandelten Gutes oder des jeweiligen Anlagenteils. zusätzliche Risiken entstehen bei Reparaturen in der Anlage, z.B. durch den Funkenflug von Schweißgeräten oder durch die Verwendung leicht entflammbarer Lösungsmittel. Deswegen ist eine Erkennung von Schwelbränden im Frühstadium von mindestens gleichhoher Wichtigkeit, wie das Erkennen kritischer Zustände. Besondere Schwierigkeiten ergeben sich bei einer berührungslosen Detektion in staubemittierenden Anlagenteilen durch die dort herrschende staubbelastete Atmosphäre.

Es ist Aufgabe der Erfindung, ein, insbesondere anlagentaugliches, Verfahren und eine Einrichtung zur Durchführung des Verfahrens in Form eines Überwachungssystems anzugeben, das eine umfassende Überwachung und speziell eine Ermittlung kritischer Zustände in staubbelasteten Anlagen, wie Bekohlungsanlagen, Mühlen, Bergbaubetriebspunkten etc., ermöglicht. Dies geschieht neuartig durch die vorgenannte Ermittlung der zustandsabhängig entwickelten Gase, wobei die Temperatur oder die anderen Zustände der Stoffe oder Stoffgemische (Güter) durch einen Vergleich von bei mindestens zwei unterschiedlichen Sensorzuständen gemessenen und aus den Messungen errechneten Zustands- und Entwicklungsmustern mit gespeicherten Mustern ermittelt werden.

Gasdetektoren für Anlagen, auch Anlagen mit staubbelasteter Atmosphäre und ihre Komponenten sind bekannt, so z.B. aus dem DE-GM 91 13 607 der beiden Anmelderinnen. Es ist weiterhin bekannt, für ähnliche Geräte Mehrfachsensoren, z.B. mit unterschiedlichen Betriebstemperaturen einzusetzen, insbesondere zur Ermittlung der Einzelbestandteile und der Mengenverhältnisse oxidierbarer Gase. Ein Beispiel beschreibt der Aufsatz "Detection of methane/butane mixtures in air by a set of two microcalorimetric sensors" von V.Sommer, R.Rongen, P.Tobias und D.Kohl, Elsevier Sequoia, 1992. Hier wird insbesondere die Methandetektion, die auch für Bekohlungsanlagen wichtig ist, beschrieben. Aus diesem und weiterem Stand der Technik, wie er beispielsweise in dem Band "Sensors and Sensory Systems for an Electronic Nose" herausgegeben von W. Gardener und N. Bartlett, Kluwer Academic Publishers, Dordrecht / Boston / London, ISBN 0-923-1693-2 beschrieben ist, ist jedoch noch kein zuverlässiges und den Gegebenheiten von industriellen Anlagen, Halden, Deponien etc. Rechnung tragendes, kritische Zustände, auch bei staubbelasteter Atmosphäre, erkennendes, System bekannt. Insbesondere das Langzeitverhalten der bekannten Sensoren ist ungenügend.

In Ausbildung der Erfindung ist vorgesehen, daß der Vergleich der Zustands- und Entwicklungsmuster mit gespeicherten Mustern anhand von Zeitverlaufsähnlichkeiten, insbesondere nach Signalfilterung, vorzugsweise einer Tiefpaßfilterung, erfolgt, wobei, vorteilhaft für den praktischen Einsatz, die Vergleichsmuster in Abhängigkeit vom Detektionsort, vorzugsweise am jeweiligen Detektionsort selbst, ermittelt werden. Hierdurch wird die überraschende Erkenntnis berücksichtigt, daß die Verbreitung der zustandsabhängig entwickelten Gase in Anlagen weniger durch Diffusion als vielmehr über Strömungsfahnen, im Regelfall laminaren Strömungsfahnen, erfolgt. Das Detektionssystem muß also auch bauliche und belüftungstechnische Gesichtspunkte berücksichtigen, um ansprechsicher zu sein.

Da sich durch den Einfluß der Strömungsfahnen die Konzentrationen der Einzelgase am Ort der Sensoreinrichtung in zueinander proportionaler Weise ändern, ist vorteilhaft das Verhältnis der Gaskonzentrationen und dazu proportionaler Signale, die von den Sensorelementen gewonnen werden, von diesen Schwankungen befreit. Das gewonnene Signal steht in einem festen Zusammenhang zur Temperatur der Emissionsquelle. Wegen der Befreiung von Schwankungsanteilen läßt sich die Überschreitung eines Temperatur-Schwellwertes bereits nach kurzer Zeit zuverlässig angeben. Im Gegensatz dazu ist die Absolutkonzentration der Einzelgase, die zwar ebenfalls von der Temperatur der Emissionsquelle abhängt, den Schwankungen durch wechselnde Strömungsverhältnisse ausgesetzt, so daß hierbei Mittelungen über mehrere Schwankungsmaxima und -minima abgewartet werden müssen, bevor man die Überschreitung eines Schwellwertes für die Alarmabgabe zuverlässig feststellen kann. Weiterhin werden vorteilhaft die

3

unerwünschten Einflüsse von einzelnen detektierten Gasarten unterdrückt, die an anderen Orten entstehen und demzufolge anderen Strömungsverhältnissen ausgesetzt sind. Dies führt zu nicht-proportionalen Konzentrationsschwankungen am Sensorort.

Vorteilhaft ergibt sich weiter, daß das Verhältnis der Gaskonzentrationen nicht vom Aufstellungsort des Sensorsystems abhängig ist. Weiter entfernte und näher gelegene Brandherde werden also anhand ihrer Temperatur mit einer konstanten Empfindlichkeit erkannt. Im Gegensatz dazu ist die Überschreitung eines Schwellwertes bei Einzelgas-Konzentrationen von der Entfernung Sensorsystem-Brandherd abhängig.

Wie sich aus dem Vorstehenden ergibt, geben Einzelkonzentrationen nur unzureichenden Aufschluß über die Zustände von Stoffen oder Stoffgemischen, es ist wesentlich aussagekräftiger, wenn die Quotienten der Stoffe oder, insbesondere für die Detektion kritisch werdender Zustände, Quotienten von Anstiegsverläufen berücksichtigt werden. Dabei ist insbesondere bei Kunststoffen die Chlorentwicklung und/oder Fluorentwicklung zu berücksichtigen.

Vorteilhaft werden zur Erhöhung der Detektionsgenauigkeit jeweils bezüglich einzelner Gase teilselektiv wirkende Sensoren verwendet. Hierfür sind sowohl Sensoren aus unterschiedlichen Materialien geeignet als auch materialgleiche Sensoren mit unterschiedlichen, auch periodisch wechselnden, Betriebstemperaturen. Derartige teilselektiv wirkende Sensoren mit unterschiedlichen Betriebstemperaturen sind z.T. bereits aus der Kraftfahrzeug-Abgasmeßtechnik zur CO etc. Messung bekannt.

Da hier jedoch eine gezielte, gleichmäßige und schnelle Anströmung der Sensoren erreicht werden kann und die Staubbelastung (Ruß) nur gering ist, können diese Lösungen nicht auf Anlagenüberwachungssysteme übertragen werden. Der Fachmann mußte also selbst erfinderisch tätig werden. Dies insbesondere in bezug auf die Auswertung.Eine besondere Schwierigkeit ergibt sich durch die mit der Zeit zunehmende Sensorvergiftung, die vorteilhaft durch zyklische Vergleichstests ermittelt wird.

Vorteilhaft wird die Sensorvergiftung ebenso wie der Zustand der beobachteten Stoffe oder Stoffgemische bzw. Anlagenteile durch Grenzwertmeldeeinrichtungen überwacht. Die Grenzwertmeldeeinrichtungen werden nur aktiv, wenn kritische Zustände erreicht zu werden drohen. Die erfinderischen Maßnahmen beinhalten also bei entsprechender Grenzwertwahl einen vorbeugenden Brandschutz.

Die Erfindung wird anhand von Zeichnungen näher erläutert, aus denen, ebenso wie aus den Unteransprüchen und der Beschreibung, auch in Kombination, weitere erfinderische Einzelheiten entnehmbar sind.

Im einzelnen zeigen:

FIG 1      das Blockschaltbild einer Tripel-Sensorgruppe,

FIG 2      das Schema des Auswerteprogramms für eine Tripelsensorgruppe,

FIG 3,4      beispielhafte Gaskonzentrations-Verlaufskurven

FIG 5      beispielhaft den zeitlifchen Verlauf des Quotienten aus den Gaskonzentrationene der FIG 3 und 4 während eines Schwelbrandes als Funktion der Zeit,

FIG 6      die relative Leitwertzunahme eines $SnO_2$-Sensors, hervorgerufen durch einen sprungweisen Übergang von 45 % auf 90 % relative Feuchte als Funktion der Temperatur des Sensors und

FIG 7      einen Ausschnitt aus einer Bekohlungsanlage mit verteilten Detektionsorten in schematisierter Form.

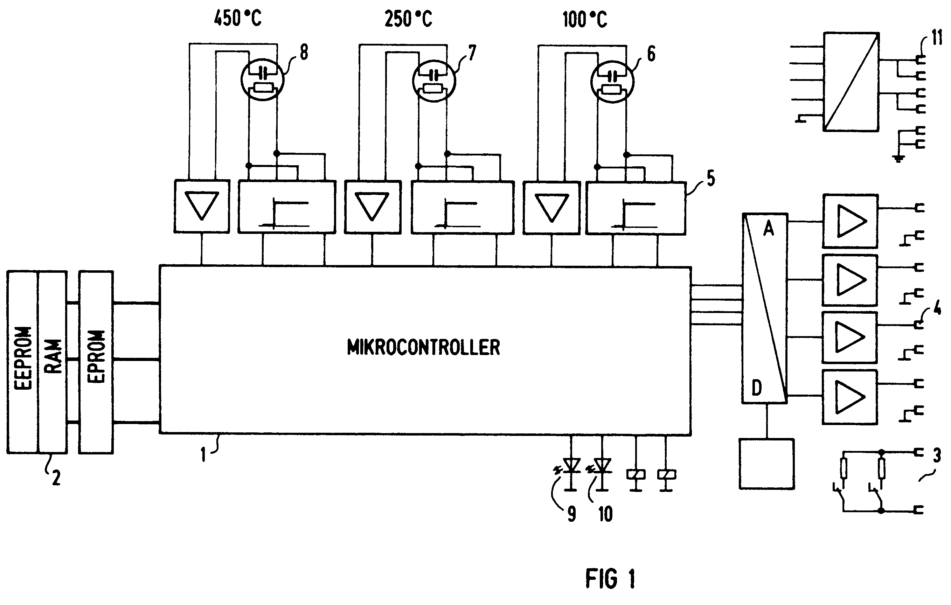

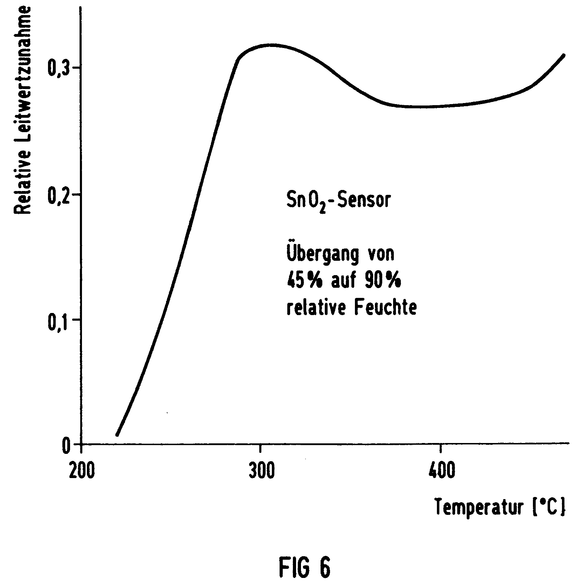

In FIG 1, die ein Blockschaltbild eines Halbleitergassensors zur Schwelbranderkennung zeigt, bezeichnet 1 den Mikrocontroller. 2 bezeichnet die Speicherelemente, 3 die digitalen Ausgänge in das System und 4 die analogen Ausgänge in das System. 11 bezeichnet Anschlußeingänge und 9 sowie 10 bezeichnen Leuchtdioden entsprechend GM 91 13 607 zur Signalisierung des Betriebszustandes des Systems. An den Mikrocontroller 1 sind Heizungsregler 5 angeschlossen, die die Temperaturen der Sensoren 6,7 und 8 regeln. In dem gezeigten Beispiel ist der Sensor 6 auf 100 °C geregelt, diese Temperatur wird bei $SnO_2$-Sensoren für die Erkennung der Summe von CO und $H_2O$ benutzt. Der Sensor 7 ist auf 250 °C geregelt, diese Temperatur wird bei $SnO_2$-Sensoren für die Erkennung der Summe der CO-,$H_2$- und $H_2O$-Konzentration benutzt. Der Sensor 8 wird auf 450 °C geregelt, bei dieser Temperatur ergibt sich bei $SnO_2$-Sensoren eine sehr gute $H_2O$-Erkennung. Die Verhältnisse der $H_2O$-Erkennung für $SnO_2$-Sensoren zeigt speziell FIG 6.

Die Temperaturen 100 °C, 250 °C und 450 °C wurden speziell für die Aufgaben der Schwelbranderkennung von Braunkohle gewählt. Sie sind von dem Sensormaterial ($SnO_2$) abhängig. Es versteht sich, daß für andere Aufgabenstellungen auch andere als nachstehend geschilderte Gaskonzentrationsquotienten und Konzentrationsamplituden-Auswertungen ebenso wie andere Temperaturen und gegebenenfalls auch andere Sensormaterialien oder andere Sensorprinzipien in z.T. auch erfinderischer Auswahl verbraucht werden. Neben Zinndioxid sind z.B. auch die Halbleiter Zinkoxid, Eisenoxid oder Galliumoxid mit Zusätzen von katalytisch aktiven Metallen geeignet. Weiterhin können MOSFET-Sensorelemente mit sensitiven Schichten z.B. aus Palladium oder Platin Verwendung finden. Außerdem können elektrochemische Meßzellen als

4

Sensorelemente verwendet werden, die auf Ionenleitung basieren.

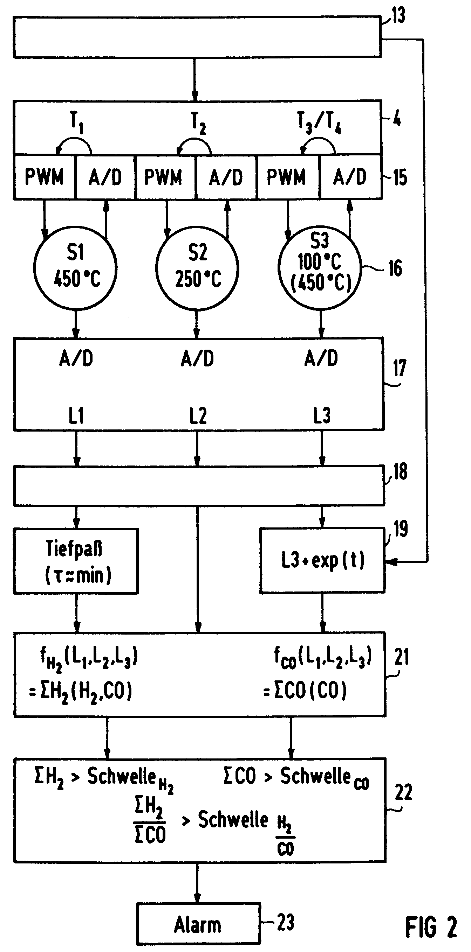

FIG 2 zeigt das Programmschema des Mikrocontrollers, wobei die einzelnen Programmteile als Blöcke dargestellt sind. Die Pfeile geben die jeweiligen Wirkrichtungen an. In FIG 2 bezeichnet 13 den Timerblock, der die zyklischen Vorgänge steuert. So soll z.B. periodisch, etwa alle 6 Stunden, eine Freiheizung des Sensors 3, in FIG 2 mit 16 bezeichnet, mit 450 °C erfolgen. Die Temperaturregelung der Sensoren erfolgt im Reglerblock 14, wobei eine Pulsweitenmodulation (PWM) zur Heizleistungssteuerung benutzt wird. Die Pulsweitenmodulationsblöcke sind neben den Analog/Digital-Wandlern 15 gezeichnet. Die einzelnen Sensoren 16 sind mit S1,S2 und S3 bezeichnet. In ihnen ist die vorzugsweise eingestellte Temperatur vermerkt. Die Sensoren haben vorzugsweise eine Platinheizbahn in Mäanderform. Ihr Widerstand dient gleichzeitig zur Temperaturmessung. Hierzu sind sie vorteilhaft durch ein Laserschnittverfahren kalibriert. Das Sensorschichtmaterial selbst ist vorteilhaft $SnO_2$.

Im Block 17 erfolgt wiederum eine Analog-Digital-Wandlung zur Messung der Leitwerte der Sensorschichten. Die Leitwerte sind mit L1,L2 und L3 angegeben. In Block 18 werden die Leitwerte normiert um Herstellungsstreuungen zu kompensieren. Die Normierung erfolgt z.B. auf Werte zwischen 0 und 1. In den Blöcken 19 und 20 wird das Anzeige- und Aufheizverhalten der einzelnen Sensoren berücksichtigt. Der Sensor, der mit 450 °C betrieben wird, ist schneller im Anzeigeverhalten als ein Sensor mit geringerer Temperatur. Die Wirkung eines Tiefpasses (Block 20) gleicht die Zeitverhalten einander an. Dabei wird gleichzeitig berücksichtigt, daß der Sensor S3 (100 °C) langsam einem Sättigungswert zudriftet. Zum Ausgleich wird er von Zeit zu Zeit, insbesondere periodisch, aufgeheizt. Zur Zeitverhaltensberechnung wird zum Leitwert L3 eine Exponentialfunktion addiert. t ist die Zeit seit dem letzten Aufheizen. In Block 21 wird schließlich die Korrekturrechnung bezüglich des $H_2O$-Gehalts durchgeführt. Dies ist erforderlich, da alle Sensoren $H_2O$-empfindlich sind. Die verwendeten Beziehungen ergeben sich aus dem Nachstehenden:

$L_1$ = Signal $(H_2O)$

$L_2$ = Signal $(H_2O, CO, H_2)$

$L_3$ = Signal $(H_2O, CO)$

$$f_{H_2} = \text{Funktion } (H_2, CO) = \frac{L_2}{L_1 - a} - b \cdot L_1$$

$$f_{CO} = \text{Funktion } (H_2, CO) = \frac{L_3}{L_1 - c} - d \cdot L_1$$

In Block 22 werden die Alarmkriterien (Schwellwerte) verarbeitet. In dem gezeigten Beispiel werden sowohl die Schwellwertüberschreitungen von $H_2$ und CO als auch des Quotienten aus $H_2/CO$ berücksichtigt. Der Alarm 23 wird ausgelöst, wenn z.B. eine vorherbestimmte Kombination aus den einzelnen Schwellwerten zutrifft oder wenn einer der einzelnen Schwellwerte mit vorherbestimmtem hohem Niveau überschritten wird. Weitere, z.B. witterungsabhängige Einflüsse können hier mit einfließen, z.B. auf der Basis einer Fuzzy-Logic. Mit einer Fuzzy-Logic ist es möglich, z.B. unterschiedliche Außen-Luftfeuchtigkeiten, Luftdrücke, aber auch die Gewichts-/Oberflächenrelationen der Güter oder den natürlichen Methangehalt unterschiedlicher Kohlesorten zu berücksichtigen. Eine Auswertung mit Hilfe der Fuzzy-Logic oder entsprechenden logischen Verknüpfungen ist insbesondere gut geeignet, über Mustervergleiche auch Ereignisse zu erkennen, die bei einfacheren Systemen zu Fehlalarmen führen. So ruft z.B. die Abgabe von Lösungsmitteldämpfen bei einem Vukanisiervorgang bei der Reparatur eines Förderbandes große Sensorsignale hervor, die sich aber in so typischer Weise von denen eines Schwelbrandes unterscheiden, daß das System erkennen kann, daß hier kein Alarmfall vorliegt. Auch Schweißvorgänge können als solche identifiziert werden und führen nicht zur Alarmgabe.

Die Fuzzy-Logic wird vorteilhaft mit einem neuronalen Netz mit Selbstlernverhalten (backpropagation) verknüpft, um die jeweiligen Einflüsse in der Notwendigkeit ihrer Berücksichtigung und der Größe ihres Einflusses selbstlernend zu speichern. Damit können auch allmähliche Veränderungen in den Umgebungsbedingungen kompensiert werden, wie z.B. Ausgasungsraten aus Baustoffen, die sich im Sommer bei höheren Temperaturen erhöhen. (Autokalibration).

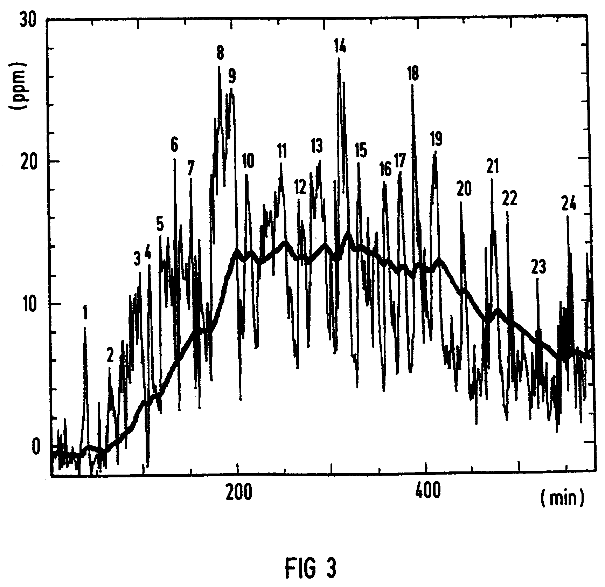

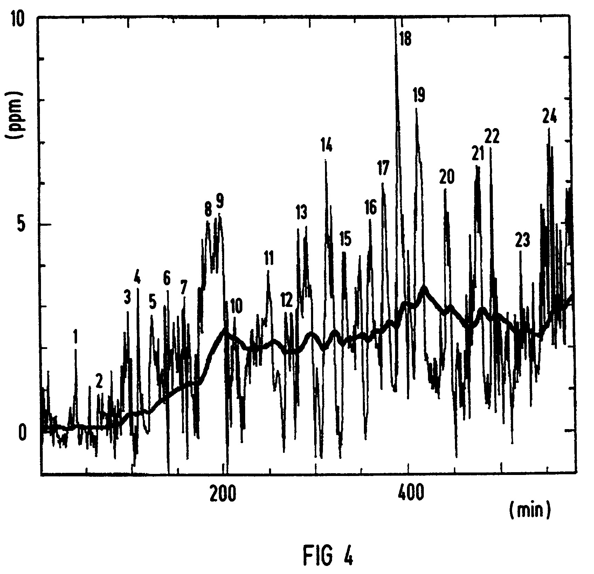

Die FIG 3 und 4 zeigen beispielhaft jeweils den zeitlichen Verlauf der CO und $H_2$-Konzentration eines Schwelbrandes. Die stark gezackten Linien geben die Meßwerte des Sensors wieder, während die dick ausgezogene Mittellinie eine Auswertung durch einen Tiefpaßfilter ($T_{1/2}$ = 25 Minuten) zeigt. Die Meßwerte wurden an einer elektrochemischen Meßzelle gewonnen. In den FIG 3 und 4 sind die Maxima der Sensorsignale, die zeitgleich auftreten, durchnumeriert worden. Diese für alle auftretenden Gase gemeinsamen Maxima werden verursacht durch im Zeitverlauf wechselnde Anströmung der Sensoren. Für die Minima gilt entsprechendes, auf eine Numerierung der Minima ist verzichtet worden.

Aus Betriebsversuchen mit Halbleitersensoren hat sich ergeben, daß Schwelbrände in bis zu 15 m Entfernung vom erfindungsgemäßen Sensorsystem detektierbar sind. Elektrochemische Meßzellen, die auch geeignet sind, weisen demgegenüber eine geringere Empfindlichkeit auf, so daß die Meßstellen dichter liegen müssen.

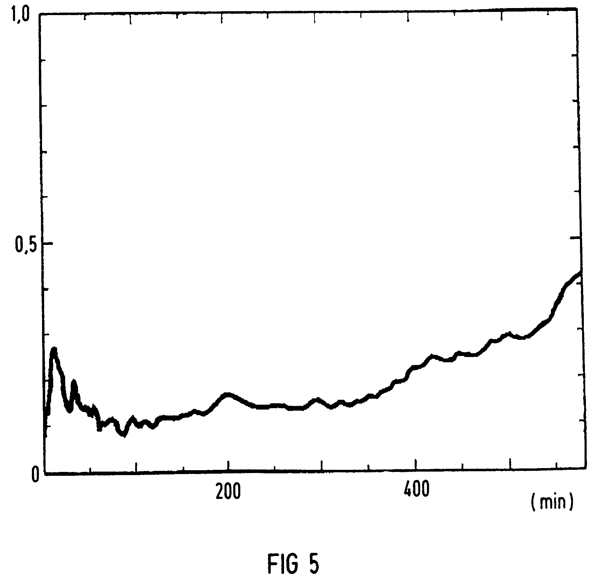

In FIG 5, die den Verlauf des $H_2/CO$-Quotienten zeigt, sind zur Verdeutlichung die Einzelmeßwerte und der Wert nach Tiefpaßfilterung voneinander getrennt aufgezeichnet. Auch hier ergibt sich für den Quotienten $H_2/CO$, daß nach einer Anlaufzeit (schwelbrandspezifisch), eine plötzliche Erhöhung auftritt, die eine eindeutige Schwellwertüberschreitungsanzeige zuläßt.

Die relative Leitwertzunahme eines $SnO_2$-Sensors beim sprungweisen Übergang von 45 auf 90 % relativer Feuchte zeigt FIG 6. Wie ersichtlich ist der Feuchteeinfluß auf die relative Leitwertzunahme sehr erheblich. Entsprechend muß auf eine fortlaufende Korrektur geachtet werden. Auch der Einfluß der unterschiedlich viel $H_2O$ enthaltenden Umgebungsluft (unvermeidlicher Luftaustausch) sollte also berücksichtigt werden.

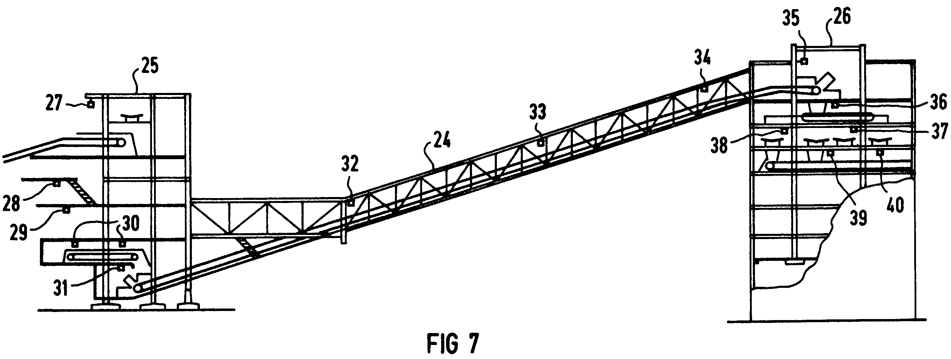

FIG 7 zeigt nun schließlich einen schematischen Teilschnitt durch eine Bekohlungsanlage. Die Förderbänder sind mit ihren Umlaufrollen in dem Stahlbau angedeutet. Im gezeigten Beispiel befindet sich eine Bandbrücke 24 zwischen zwei Verteilertürmen 25 und 26. Im Verteilerturm 25 sind die Sensoreinrichtungen 27 bis 31 angeordnet. Sie überwachen diesen Teil der Anlage. Die Bandbrücke 24 weist entsprechend Sensoreinrichtungen 32,33 und 34 auf, während der Verteilerturm 26 Sensoreinrichtungen 35 bis 40 aufweist. Die Verteilung der Sensoreinrichtungen ist nicht beliebig, sondern wird derart gewählt, daß die schon erwähnte fahnenförmige Ausbreitung der Zustandsgase zu einem Bestreichen der Sensoreinrichtungen mit Gut-Austrittsgasen führt.Dabei wird sowohl der Naturzug als auch der Zug durch Belüftungseinrichtungen berücksichtigt.

Der mechanische Aufbau der einzelnen Sensoreinrichtungen entspricht im wesentlichen dem Aufbau, wie ihn das DE-GM 91 13 607 zeigt. Lediglich der Sensor selbst ist vorzugsweise als Tripelsensor ausgebildet. Die Schaltungsplatine ist erfindungsgemäß verändert. Es versteht sich im übrigen, daß bei einer u.U. vorteilhaften Verwendung eines Einzelsensors mit unterschiedlichen Betriebstemperaturen auch das in FIG 2 gezeigte Programmschema entsprechend angepaßt wird.

Bei einem Sensor, der periodisch in verschiedene Betriebszustände gebracht und/oder auch vorteilhaft verschiedenen Auswertungsmethoden unterworfen wird, muß darauf geachtet werden, daß alle unterschiedlichen Betriebszustände oder Auswertungsroutinen in einem Zeitraum durchlaufen werden, der deutlich kleiner als die mittlere Periode der strömungsbedingten Schwankungen ist.

Die nachstehende Tabelle zeigt das Ansprechen von kommerziellen $SnO_2$-Sensoren auf verschiedene Gase in Abhängigkeit von der Betriebstemperatur.

| Temperatur | CO | $H_2$ | $H_2O$ |
|---|---|---|---|
| Bereich 100 °C | X | | X |
| Bereich 250 °C | X | X | X |
| Bereich 450 °C | | | X |

Für andere Sensorarten gelten z.T. andere Temperaturbereiche, die zu beachtenden erfindungsgemäßen Grundprinzipien sind jedoch für die aufgeführten Sensormaterialien im wesentlichen gleich.

Das erfindungsgemäße System kann bei der Gewinnung oder bei der Erarbeitung von Kohle besonders vorteilhaft, da in der beschriebenen Form, angewendet werden. Auch bei anderen industriellen Anwendungen, z.B. bei der Erkennung des Austritts von Brandgasen oder speziellen Faulgasen oder bei der Überwachung von Prozessen, die mit Wasserstoff arbeiten sowie in der chemischen Industrie und im allgemeinen und vorbeugenden Brandschutz ist, wenn eine staubbelastete Atmosphäre vorhanden ist, die bei bekannten System häufig einen sinnvollen Einsatz verhindert.

**Patentansprüche**

1. Verfahren und Einrichtung zur indirekten Ermittlung der Temperatur oder anderer, insbesondere kritischer, Zustände von zustandsabhängig Gase entwickelnden Stoffen oder Stoffgemischen durch gassensitive Sensoren, z.B. zur Verhinderung oder zur Detektion von Schwelbränden in Bekohlungsanlagen, wobei die Temperatur oder die anderen Zustände der Stoffe oder Stoffgemische durch einen Vergleich von bei mindestens zwei unterschiedlichen Sensorzuständen gemessenen und aus den Messungen errechneten Gaszustands- und Entwicklungsmustern mit gespeicherten Mustern ermittelt werden.

2. Verfahren nach Anspruch 1,
**dadurch gekennzeichnet,**
daß die unterschiedlichen Sensorzustände, vorzugsweise an nur einem Sensor, zyklisch erzeugt oder daß die Auswertemethoden zyklisch geändert werden.

3. Verfahren nach Anspruch 1 oder 2,
**dadurch gekennzeichnet,**
daß der Vergleich anhand von Zeitverlaufsähnlichkeiten, insbesondere nach Filterung der Ausgangssignale der Sensoren, vorzugsweise einer Tiefpaßfilterung, erfolgt.

4. Verfahren nach Anspruch 1,2 oder 3,
**dadurch gekennzeichnet,**
daß die Vergleichsmuster in Abhängigkeit vom Detektionsort, vorzugsweise am jeweiligen Detektionsort selbst, ermittelt werden.

5. Verfahren nach Anspruch 1,2,3 oder 4,
**dadurch gekennzeichnet,**
daß in den Mustern die Zusammensetzungsverhältnisse und ihre Quotienten Hauptbestandteile bilden.

6. Verfahren nach Anspruch 1,2,3,4 oder 5,
**dadurch gekennzeichnet,**
daß in den Mustern die zeitlichen Änderungen der Zusammensetzungsverhältnisse, ihre Quotienten und die Quotienten der Anstiegsverläufe Hauptbestandteile bilden.

7. Verfahren nach Anspruch 1,2,3,4,5 oder 6,
**dadurch gekennzeichnet,**
daß bei den entwickelten Gasen der Gehalt der oxidierbaren Bestandteile und der $H_2O$-Gehalt als Hauptgrößen ermittelt und verglichen werden.

8. Verfahren nach Anspruch 1,2,3,4,5 oder 6,
**dadurch gekennzeichnet,**
daß zur Detektion von Kunststoffzuständen bzw. -Bränden, die Chlorentwicklung und/oder Fluorentwicklung als Hauptgrößen ermittelt und verglichen werden.

9. Verfahren nach Anspruch 1,2,3,4,5,6,7 oder 8,
**dadurch gekennzeichnet,**
daß für die Ermittlung der Daten der einzelnen Gase oder für die Kombinationen aus zumindest zwei Gasen, insbesondere temperaturabhängig, teilselektiv wirkende Sensorzustände verwendet und zwischen den Ergebnissen Auswertungsverknüpfungen vorgenommen werden.

10. Verfahren nach Anspruch 1,2,3,4,5,6,7,8 oder 9,
**dadurch gekennzeichnet,**
daß für die Ermittlung der Muster der einzelnen Gase oder Gasgemische teilselektiv wirkende, spezielle Arbeitstemperaturen verwendet werden.

11. Verfahren nach Anspruch 1,2,3,4,5,6,7,8,9 oder 10,
**dadurch gekennzeichnet,**
daß der $H_2O$-Gehalt der Gase und weitere, verfälschend wirkende, Gasbestandteile in Form von Korrekturkurven berücksichtigt werden.

12. Verfahren nach Anspruch 1,2,3,4,5,6,7,8,9,10 oder 11,
**dadurch gekennzeichnet,**
daß verfälschend wirkende Gasbestandteile, insbesondere der Schwefelgehalt, vorzugsweise in der Form von $SO_2$, bezüglich ihrer Sensorvergiftung berücksichtigt werden.

**13.** Verfahren nach Anspruch 11 oder 12,
**dadurch gekennzeichnet**,
daß beim Erreichen eines Grenzwerts der Sensorvergiftung ein Signal erzeugt wird, das einen Austausch von Sensoren anfordert.

**14.** Verfahren nach einem oder mehreren der vorhergehenden Ansprüche **dadurch gekennzeichnet**, daß die unterschiedlichen Sensorzustände durch unterschiedliche Arbeitstemperaturen der Sensoren erzeugt werden und vorzugsweise zyklisch, veränderbar sind, insbesondere im Temperaturbereich von 100 bis 500 °C, vorzugsweise zur Freiheizung des Sensors (Austreibung von $H_2O$ aus Poren der Sensoroberseite).

**15.** Verfahren nach einem oder mehreren der vorhergehenden Ansprüche **dadurch gekennzeichnet**, daß die temperaturabhängigen Gaszustands- und Veränderungs-Musterkurven in einem reprogrammierbaren Speicher abgelegt und, insbesondere zyklisch, in bezug auf ihre fortgeltende Relevanz überprüft und ggf. korrigiert werden.

**16.** Verfahren nach einem oder mehreren der vorhergehenden Ansprüche **dadurch gekennzeichnet**, daß Musterkurven irregulärer Ereignisse, z.B. von Vulkanisationsarbeiten oder Schweißarbeiten, gespeichert und aus den Mustern der kritischen Zustände aussortiert werden, insbesondere durch Fuzzy-Logic.

**17.** Einrichtung zur Durchführung des Verfahrens nach einem oder mehreren der vorhergehenden Ansprüche,
**dadurch gekennzeichnet**,
daß sie einen Mikrocontroller (1) besitzt, der zumindest einen Rechenprogrammspeicher und einen reprogrammierbaren Speicher (2) zur Aufnahme von Referenzdaten, insbesondere Referenzmuster sowie Regelungsausgänge, digitale und/oder analoge Signalausgänge (3,4) sowie Programmier- und/oder Referenzwerteingänge aufweist, und der mit zumindest einem temperaturbeeinflußbaren Gassensor, z.B. $SnO_2$-Sensor, verbunden ist.

**18.** Einrichtung nach Anspruch 17,
**dadurch gekennzeichnet**,
daß sie mit Grenzwertverarbeitungseinheiten verbunden ist und örtliche oder überörtliche Grenzwertreaktionseinheiten aufweist.

**19.** Einrichtung nach Anspruch 17 oder 18,
**dadurch gekennzeichnet**,
daß sie zumindest ein Zeitverhaltens-Änderungselement aufweist, das insbesondere Zeitverhaltens-Änderungsmuster enthält.

**20.** Verfahren und Einrichtung nach einem oder mehreren der vorhergehenden Ansprüche,
**dadurch gekennzeichnet**,
daß sie in der Energie- und Grundstoffindustrie zur Vermeidung kritischer Zustände verwendet werden.

**21.** Verfahren und Einrichtung nach einem oder mehreren der vorhergehenden Ansprüche,
**dadurch gekennzeichnet**,
daß sie zum Aufspüren von Gaslecks verwendet werden, z.B. an Leitungen, die Wasserstoff oder andere brennbare Gase führen.

**22.** Verfahren und Einrichtung nach einem oder mehreren der Ansprüche 16,17 oder 18,
**dadurch gekennzeichnet**,
daß sie bei Halden- und Deponieüberwachungen verwendet werden.

**23.** Verfahren und Einrichtung nach einem oder mehreren der vorhergehenden Ansprüche,
**dadurch gekennzeichnet**,
daß sie im Zusammenwirken mit Indikatorlacken verwendet werden.

FIG 1

450°C    250°C    100°C

8
7
6
5

MIKROCONTROLLER

EEPROM  RAM  EPROM

1
2
9  10

A
D

11
4
3

EP 0 608 840 A1

9

FIG 2

FIG 3

FIG 4

FIG 5

FIG 6

FIG 7

Europäisches
Patentamt

**EUROPÄISCHER RECHERCHENBERICHT**

Nummer der Anmeldung

EP 94 10 1069

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | EP-A-0 092 068 (CERBERUS AG) <br> * Seite 3, Zeile 26 - Seite 9, Zeile 7 * <br> * Seite 11, Zeile 4 - Zeile 15; <br> Abbildungen 1-4 * <br> ----- | 1-23 | G01N27/12 <br> G08B17/117 |
| | | | **RECHERCHIERTE SACHGEBIETE (Int.Cl.5)** |
| | | | G01N <br> G08B |

Der vorliegende Recherchenbericht wurde für alle Patentansprüche erstellt

| Recherchenort | Abschlußdatum der Recherche | Prüfer |
|---|---|---|
| DEN HAAG | 10. Mai 1994 | Sgura, S |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
...........................................................................................
& : Mitglied der gleichen Patentfamilie, übereinstimmendes
   Dokument

EPO FORM 1503 03.82 (P04C03)